# EUROPÄISCHE PATENTSCHRIFT

(11) **EP 0 782 659 B1**
(45) Veröffentlichungstag und Bekanntmachung des Hinweises auf die Patenterteilung: **17.06.1998**
(21) Anmeldenummer: 95933392.3
(22) Anmeldetag: 18.09.1995
(51) Int. Cl.: E06B 9/24, G02B 27/00

(54) **WINKELSELEKTIVE VERSCHATTUNGSEINRICHTUNG**
ANGLE-ADJUSTABLE SHADING SYSTEM
DISPOSITIF DE PROTECTION CONTRE LA LUMIERE A POSITION ANGULAIRE VARIABLE

(30) Priorität: 21.09.1994 DE 4433629
(43) Veröffentlichungstag der Anmeldung: 09.07.1997
(73) Patentinhaber: Gutjahr, Jörg, 51588 Nümbrecht (DE)
(72) Erfinder: Gutjahr, Jörg, 51588 Nümbrecht (DE)
(74) Vertreter: Selting, Günther, Dipl.-Ing.
(86) Internationale Anmeldenummer: EP9503678
(87) Internationale Veröffentlichungsnummer: WO9609458

(56) Entgegenhaltungen:
- EP-A- 0 538 728
- DE-A- 3 739 062
- DE-A- 3 840 262

## Beschreibung

Die Erfindung betrifft eine winkelselektive Verschattungseinrichtung, die beispielsweise als Sonnenschutz benutzt werden kann, um eine übermäßige Sonneneinstrahlung in Gebäude zu verhindern.

Üblicherweise werden zur Verschattung von Gebäude Jalousien eingesetzt, die übermäßige Sonneneinstrahlung fernhalten sollen. Solche Jalousien haben aber den Nachteil, daß sie nicht nur das direkt einfallende Sonnenlicht abschatten, sondern den gesamten Lichteinfall stark einschränken, also auch Streulicht. Außerdem wird durch die Lamellen die Sicht behindert. Sonnenschutzvorrichtungen, die horizontal oberhalb von Fenstern angebracht sind, bewirken ebenfalls eine Abschirmung gegen Streulicht, das hauptsächlich steil von oben einfällt. Sie verdunkeln daher den Raum mehr als dies zur Fernhaltung direkter Sonneneinstrahlung erforderlich wäre.

Aus DE 37 39 062 A1 ist es bekannt, auf einer Scheibe ein reguläres, d.h. bildfreies Gitterhologramm zu erzeugen, das Strahlung, die unter einem bestimmten Einfallswinkel einfällt, so in die Scheibe einleitet, daß an den Scheibenflächen jeweils Totalreflexion eintritt. Die Hologrammschicht enthält ein zweites Hologramm, das zu dem ersten Hologramm invers ist und das bewirkt, daß der totalreflektierte Strahl aus der Scheibe austritt. Auf diese Weise werden Lichtstrahlen, die unter einem bestimmten Winkel auf die Scheibe auftreffen, reflektiert. Diese Reflexionseinrichtung ist bei bestimmten Anwendungen einsetzbar, z.B. bei Head-Up-Displays, bei denen Symbole auf die Windschutzscheibe projiziert werden, die mit den Hologrammen versehen ist. Dabei bewirken die gleichzeitig in derselben Schicht erzeugten Hologramme eine Verschlechterung des jeweiligen Beugungswirkungsgrades durch Übersprechen. Dies hat zur Folge, daß ein Teil des unter dem bestimmten Winkel auf die Scheibe auftreffenden Lichts durch die Scheibe hindurchgeht. Für Head-Up-Displays ist dies tolerabel, da der Lichtverlust durch eine stärkere Lichtquelle ausgeglichen werden kann.

Der Erfindung liegt die Aufgabe zugrunde, eine winkelselektive Verschattungseinrichtung zu schaffen, die als Fenster oder Gebäudefassade verwendbar ist und direkte Sonneneinstrahlung fernhält, die Sicht nach außen und den Diffuslichteinfall zur Raumausleuchtung jedoch nicht behindert.

Die Lösung dieser Aufgabe erfolgt erfindungsgemäß mit den im Anspruch 1 angegebenen Merkmalen.

Die erfindungsgemäße Verschattungseinrichtung besteht aus einer Scheibe mit einander überlagerten entgegengesetzt orientierten regulären Hologrammen. Jedes dieser Hologramme leitet Licht, das unter einem bestimmten Winkel auftritt, unter einem solchen Eintrittswinkel in die Scheibe ein, daß in der Scheibe Totalreflexion eintritt. Bei parallelen Scheibenflächen würde Licht, das an der Rückseite der Scheibe totalreflektiert wurde, an der Vorderseite ebenfalls totalreflektiert und dann doch durch die Scheibe hindurchgehen. Das erste Hologramm, das das Licht in die Scheibe eingeleitet hatte, verhindert nicht die Totalreflexion an der betreffenden Vorderseite der Scheibe und läßt daher das Licht nicht wieder aus der Scheibe heraustreten. Dadurch, daß flächendeckend zwei entgegengesetzt orientierte Hologramme in Lichtrichtung hintereinander angeordnet sind, behält jedes Hologramm seinen vollen Wirkungsgrad und die Hologramme stören sich gegenseitig nicht. Überraschenderweise hat sich herausgestellt, daß zwei sich übereinander angeordnete entgegengesetzt orientierte Hologramme keine gegenseitigen Störungen hervorrufen, so daß die gesamte Scheibenfläche mit den Hologrammen versehen werden kann und dann alles Licht, das aus einem ganz bestimmten Winkel einfällt, reflektiert, während das übrige Licht unbeeinflußt von den Hologrammen die Scheibe passiert. Die Verschattungseinrichtung mit den auf separaten Trägern übereinander angeordneten Hologrammen reduziert wegen der hohen Elektrizität der einzelnen Hologramme wirksam den Durchlaß der Sonnenstrahlung.

Ein wesentlicher Vorteil der Verschattungsvorrichtung besteht darin, daß sie alles Licht reflektiert, das unter einem bestimmten Höhenwinkel einfällt, unabhänig von dem Azimutwinkel (d.h. dem auf eine horizontale Ebene projizierten Einfallswinkel). Um das Sonnenlicht gezielt fernzuhalten, muß lediglich sichergestellt sein, daß die Sonne unter dem bestimmten Höhenwinkel auf die Scheibe auftrifft. Da die Sonne im Tagesverlauf ihre Höhe ändert, erfolgt zweckmäßigerweise eine Nachführung der Scheibe durch Schrägstellung. Dies kann dadurch geschehen, daß ein ganzes Fenster, das mit den Hologrammen versehen ist, gesteuert schräggestellt wird, oder daß die Verschattungsvorrichtung aus horizontalen Lamellen besteht, die schräggestellt werden.

Die Erfindung nutzt die winkelselektive Reflexion einer mit entgegengesetzt orientierten Hologrammen versehene Scheibe nicht dazu, optische Spielgelbilder zu erzeugen, sondern zum selektiven Fernhalten der direkten Sonneneinstrahlung von dem Innern eines Gebäudes, um ungewollte Aufheizungen und störende Blendeffekte zu vermeiden, im übrigen aber Tageslicht in Form von Streulicht in das Gebäude hineinzulassen.

Im folgenden wird unter Bezugnahme auf die Zeichnungen ein Ausführungsbeispiel der Erfindung näher erläutert.

Es zeigen:
- Fig. 1: die Herstellung eines totalreflektierenden Hologramms,
- Fig. 2: eine mit dem Hologramm versehene Scheibe, in der Totalreflexion auftritt,
- Fig. 3: die Aufteilung und Umlagerung des Hologramms,
- Fig. 4: die Wirkung der überlagerten Hologramme, und
- Fig. 5: die Verschattungseinrichtung an einem Gebäude.

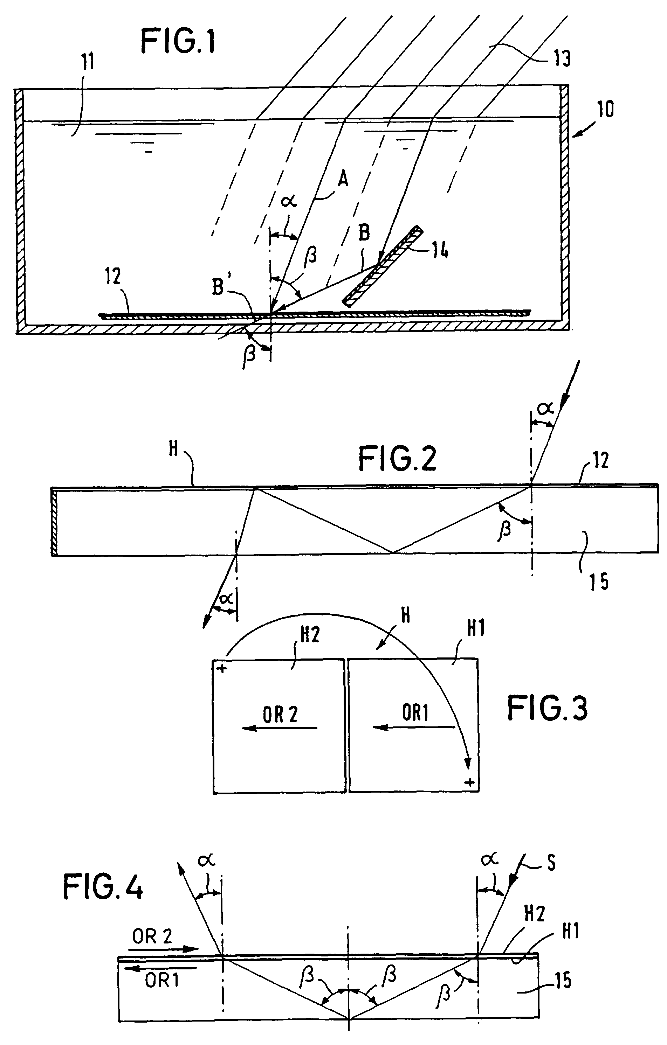

Gemäß Fig. 1 ist ein Gefäß 10 vorgesehen, dessen Wand den gleichen Brechungsindex hat wie Glas, d.h. einen Brechungsindex n von etwa 1,5. Dieses Gefäß 10 ist mit einer durchsichtigen Immersionsflüssigkeit 11 gefüllt, die ebenfalls diesen Brechungsindex hat. In dem Gefäß befindet sich über dem Gefäßboden eine Folie 12, die an ihrer Oberseite mit einer lichtempfindlichen Schicht beschichtet ist und an ihrer Unterseite eine Lichthofschutzschicht trägt, d.h. eine vollständig absorbierende Schicht. Diese Folie wird mit parallel einfallendem Licht 13 belichtet, das auf die Oberfläche der Immersionsflüssigkeit 11 unter einem Winkel (bezogen auf die Flächennormale) auftrifft, der kleiner ist als der Grenzwinkel der Totalreflexion, so daß das Licht in der Flüssigkeit zum Lot hin gebrochen wird. Das Licht trifft dann unter einem Winkel α auf die lichtempfindliche Schicht der Folie 12.

In der Immersionsflüssigkeit befindet sich ein schräger Spiegel 14, der das einfallende Licht derart reflektiert, daß dieses Licht unter einem Winkel β auf die Folie 12 trifft, der größer ist als der Winkel α und auch größer als der Grenzwinkel der Totalreflexion an der Grenzfläche zwischen der Immersionsflüssigkeit 11 und Luft.

Der direkt einfallende Strahl A und der vom Spiegel 14 reflektierte Strahl B bestehen aus monochromatischem kohärenten Licht. Diese beiden Strahlen A und B überlagern sich auf der lichtempfindlichen Schicht der Folie 12 und belichten dort ein reguläres (bildfreies) Hologramm, das fixiert wird.

Ein reguläres Hologramm hat die Wirkung, daß Licht, das aus der Richtung des einen hologrammerzeugenden Strahles A einfällt in diejenige Richtung umgelenkt wird, in die sich der andere hologrammerzeugende Strahl B nach dem Passieren der Folie fortsetzen würde. Ein Strahl der aus der Richtung des Strahls A einfällt, wird also in Richtung des Strahles B' vom Lot weg gebeugt, und zwar unter einem Winkel β, der größer ist als der Grenzwinkel der Totalreflexion bei einem Brechungsindex n von ca. 1,5.

Figur 2 zeigt eine Scheibe 15, auf die die Folie 12 mit dem gemäß Figur 1 erzeugten Hologramm H aufgeklebt wurde. Auf diese Scheibe fällt durch das Hologramm H hindurch ein Strahl unter dem Winkel α. Dieser Strahl wird von dem Hologramm H vom Einfallslot weg gebeugt, so daß er unter dem größeren Winkel β in die Scheibe 15 eindringt. Da β größer ist als der Grenzwinkel der Totalreflexion, wird der Strahl an der Rückseite und dann an der Vorderseite der Scheibe reflektiert, wo er durch das Hologramm H so gebeugt wird, daß er unter dem Winkel α an der Rückseite der Scheibe austritt. Dadurch wird die Strahlungsenergie durch die Scheibe hindurchgeleitet. Dies soll verhindert werden.

Gemäß Figur 3 wird die Folie 12 mit dem Hologramm H in zwei gleiche Teile zerlegt, die beide einen Teil H1,H2 des regulären Hologramms H tragen. Die Orientierungsrichtungen der Hologramme sind mit OR1 und OR2 bezeichnet und zunächst noch gleich. Die Orientierungsrichtung ist diejenige Richtung in einer zur Scheibe oder zur Hologrammfläche senkrechten Orientierungsebene, in der die hologrammerzeugende Strahlung fortgeschritten ist, also in Figur 1 von rechts nach links. In der gleichen Richtung wirkt die Reproduktion gemäß Figur 2.

Das Hologramm H2 wird nun gemäß Figur 3 so gedreht und über das Hologramm H1 gelegt, daß die obere linke Ecke des Hologramms H2 mit der unteren rechten Ecke des Hologramms H1 zusammenfällt. Die auf diese Weise gemäß Figur 4 übereinandergelegten Hologramme H1 und H2 haben einander entgegengesetzte Orientierungen OR1 bzw. OR2.

Ein Strahl S, der gemäß Figur 4 unter dem Einfallswinkel α auf die Hologramme auftrifft, wird von dem Hologramm H2 durchgelassen und von dem Hologramm H1 unter einem Winkel β in die Scheibe 15 eingeleitet. An der Rückseite der Scheibe 15 wird der Strahl unter dem Winkel β reflektiert. Dies ist genau derjenige Winkel, unter dem das Hologramm H2 den Strahl aus der Scheibe 15 herausläßt. Mit anderen Worten: Das Hologramm H1 läßt nur diejenigen Strahlen unter einem Winkel β der unter dem Grenzwinkel der Totalreflexion liegt, in die Scheibe 15 ein, die selektiv unter dem Einfallswinkel α auftreffen. Andererseits läßt das Hologramm H2 von denjenigen Strahlen in der Scheibe 15, deren Winkel größer ist als der Grenzwinkel der Totalreflexion, nur solche Strahlen heraus, die unter dem Winkel β auf das Hologramm H2 treffen.

Die Hologramme H1 und H2 befinden sich bei dem vorliegenden Ausführungsbeispiel jeweils auf einer Folie 12. Die Folien 12 können fest aneinanderhaftend übereinanderliegend auf die Scheibe 15 aufgeklebt werden.

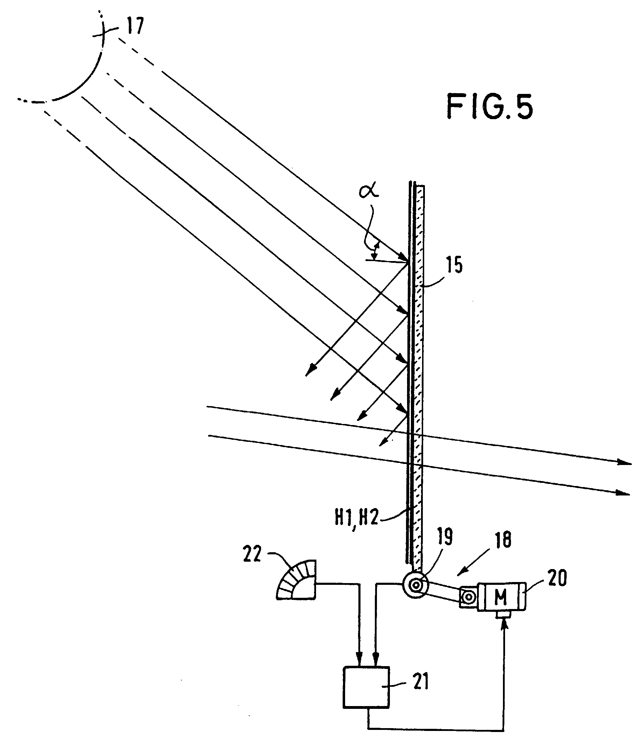

Figur 5 zeigt die Verschattungsvorrichtung, die aus einer Scheibe 15 besteht, welche auf der Außenseite die beiden Hologramme H1 und H2 trägt, während die entgegengesetzte Seite dem Gebäude zugewandt ist. Bei der Scheibe 15 kann es sich um eine Fensterscheibe oder um eine durchsichtige Lamelle einer Jalousie handeln.

Die Hologramme H1,H2 sind auf der Scheibe 15 mit vertikaler Orientierung ausgerichtet, so daß sie selektiv auf den Höhenwinkel der Sonne reagieren. Direktes, d.h. parallel einfallendes Licht der Sonne 17, das unter einem Höhenwinkel α auf die Scheibe 15 fällt, wird nach dem anhand von Figur 4 erläuterten Prinzip durch die kombinierte Wirkung der Hologramme H1 und H2 reflektiert, während alles Licht das aus einem anderen Höhenwinkel als dem vorbestimmten Winkel α auftrifft, durch die Scheibe 15 hindurchgeht. Insbesondere hindern die Hologramme nicht die Sicht nach außen und auch nicht das Durchdringen von Strahlung, die unter einem Winkel einfällt, der größer ist als α.

Damit die Scheibe 15 dem Höhenwinkel der Sonne derart nachgeführt werden kann, daß die Sonnenrichtung stets unter dem Winkel α zur Scheibennormalen liegt, ist die Nachführvorrichtung 18 vorgesehen. Die Scheibe 15 ist um eine horizontale Achse 19 schwenkbar und wird dabei von einem Motor 20 eingestellt. Die jeweilige Winkelstellung der Scheibe 15 wird über einen Winkelkodierer gemessen und einem Regler 21 zugeführt. Ein Höhenwinkelsensor 22 dient dazu, den jeweiligen Höhenstand der Sonne zu ermitteln. Das Signal des Höhenwinkelsensors 22 wird ebenfalls dem Regler 21 zugeführt, der den Motor 20 so steuert, daß die Scheibe 15 jeweils so auf die Sonne ausgerichtet wird, daß die Scheibe 15 stets im Winkel α auf die Sonne ausgerichtet ist.

## Patentansprüche

1. Winkelselektive Verschattungseinrichtung mit einer Scheibe (15), die zwei separate übereinander angeordnete gleiche entgegengesetzt orientierte reguläre Hologramme (H1,H2) trägt, von denen jedes Licht, das in einer zur Scheibe senkrechten Orientierungsebene unter einem bestimmten Winkel (α) auftrifft, unter einem Eintrittswinkel (β) in die Scheibe einleitet, bei dem in der Scheibe Totalreflexion eintritt, wobei die Hologramme (H1,H2) einander überlagert sind.

2. Verschattungseinrichtung nach Anspruch 1, dadurch gekennzeichnet, daß die Scheibe (15) derart angeordnet ist, daß die Orientierungen (OR1,OR2) der Hologramme (H1,H2) vertikal verlaufen.

3. Verschattungseinrichtung nach Anspruch 1 oder 2, dadurch gekennzeichnet, daß eine Nachführvorrichtung (18) vorgesehen ist, die die Scheibe (15) dem Höhenwinkel der Sonne (17) derart nachführt, daß das direkte Sonnenlicht stets unter dem bestimmten Winkel (α) auf die Scheibe (15) auftrifft.

4. Verschattungseinrichtung nach einem der Ansprüche 1 bis 3, dadurch gekennzeichnet, daß die Hologramme (H1,H2) auf Folien (12) enthalten sind, die übereinander auf die Scheibe (15) aufgeklebt sind.

## Claims

1. An angle-selective shading device comprising a panel (15) carrying two separate, identical, oppositely oriented, regular holograms (H1,H2) arranged above each other, wherein each of said holograms (H1,H2) introduces light incident under a particular angle (α) in an orientation plane positioned vertically to said panel, into said panel under an entrance angle (β) causing a total reflection in said panel, said holograms (H1,H2) being superimposed onto each other.

2. The shading device according to claim 1, characterized in that said panel (15) is arranged in such a manner that the orientations (OR1,OR2) of said holograms (H1,H2) extend vertically.

3. The shading device according to claim 1 or 2, characterized in that a follow-up device (18) is provided to cause said panel (15) to follow the vertical angle of the sun (17) in such a manner that the direct sunlight always impinges onto said panel (15) under said particular angle (α).

4. The shading device according to any one of claims 1 to 3, characterized in that said holograms (H1,H2) are arranged on films (12) which are bonded in mutually superimposed relationship onto said panel (15).

## Revendications

1. Dispositif de protection contre la lumière à position angulaire sélective comportant une vitre (15) qui comporte deux hologrammes (H1, H2) réguliers, à orientation opposée, identiques, disposés séparément l'un au-dessus de l'autre et à partir desquels toute lumière qui frappe selon un angle déterminé (α) sur le plan d'orientation perpendiculaire à la vitre, pénètre selon un angle d'entrée (β) dans la vitre, pour lequel a lieu une réflexion totale dans la vitre, les hologrammes (H1, H2) se superposant l'un à l'autre.

2. Dispositif de protection contre la lumière selon la revendication 1, caractérisé en ce que la vitre (15) est disposée de sorte que les orientations (OR1, OR2) des hologrammes (H1, H2) soient verticales.

3. Dispositif de protection contre la lumière selon l'une des revendications 1 ou 2, caractérisé en ce qu'il est prévu un dispositif de suivi (18) qui suit la vitre (15) selon l'angle d'ascension du soleil (17) de façon que la lumière directe du soleil ait une incidence permanente sur la vitre (15) selon l'angle déterminé (α).

4. Dispositif de protection contre la lumière selon l'une des revendications 1 à 3, caractérisé en ce que les hologrammes (H1, H2) figurent sur des feuilles (12) qui sont collées l'une sur l'autre sur la vitre (15).
